# EUROPEAN PATENT APPLICATION

(11) **EP 3 190 513 A1**
(43) Date of publication of application: **12.07.2017**
(21) Application number: 15838687.0
(22) Date of filing: 23.03.2015
(51) Int. Cl.: G06F 9/445

(54) **METHOD, DEVICE AND SYSTEM FOR AUTOMATICALLY ADAPTING MULTIMODE DATA CARD DEVICE**

(30) Priority: 05.09.2014 CN 201410453483
(71) Applicant: ZTE Corporation, Shenzhen, Guangdong 518057 (CN)
(72) Inventor: ZHANG, Jianchang, Shenzhen Guangdong 518057 (CN)
(74) Representative: Novagraaf Technologies
(86) International application number: PCT/CN2015/074906
(87) International publication number: WO 2016/033958

(57) **Abstract**

A method, device and system for automatically adapting multimode data card equipment are provided. The device includes: a kernel layer module, which is arranged to establish a communication connection with a host module preinstalled at a target host side after the multimode data card equipment is accessed to a target host, and perform mode adaption with the host module via a customized instruction; and a functional layer module, which is arranged to configure a mode of the multimode data card equipment according to an adapted mode obtained through the mode adaption performed by the kernel layer module. A solution is provided for automatically and conveniently installing and loading the mode required by a host without being affected by a host system. The solution is flexible and convenient, and better solves the problem in related art.

## Description

### Technical Field

The present disclosure relates to the field of computer technology, and in particular to, a method, device and system for automatically adapting multimode data card equipment.

### Background

In related art, when some data card products are used, first it is needed to install on a host a user interface, a PC driver and other related software. All the related software can be regarded as a customized host module. The driver is preinstalled in a host system. After the data card product is connected with the host installed with the software, the host system judges according to a certain criteria, and then selects a proper driver from the drivers preinstalled in the host system, so as to install or update the driver of the data card product under a certain mode.

After being connected to the host, data card terminal equipment, under whatever mode, needs to be identified by the host system, and then driver programs are installed thereon. Because of the diversity of customer requirements and host systems, data card terminal equipment needs to provide different modes so as to meet the different requirements for mode configuration and perform adaptive installation. That is, the data card terminal equipment needs to provide, for example, two different ports and two or more sets of configuration, then the host system will inevitably reinstall the adapted driver for the equipment in a new mode. The data card terminal equipment needs to restart USB PHY when switching its mode, which causes a certain time delay. A process of installing the driver is added, and a mode is updated and installation is performed, multiple sets of configuration should be prepared for adapting and installing the driver.

By taking network card equipment for example, on different operating systems, terminal equipment using a data card may need to switch the network card. In the process of switching the network card, it is required to perform a series of identification and judgement on the PC operating system, and the host needs to send specific commands. The data card terminal equipment reports a corresponding and correct network card. After the user performs a mode switch, the host sends the specific commands to make the data card equipment switch to the normal work mode. These specific commands are customized by manufactures, and only the software of the host module provided by the manufactures can perform the switch normally. These switch commands are comparatively time consuming, and the time of other modes is too long, so the user experience is poor.

To sum up, in related art, when the multimode data card terminal equipment performs mode adaption with the host, there are some deficiencies.
(1) It is needed to restart USB PHY during mode switch.
(2) When the host system adapts the mode driver, the driver has to be installed for many times.
(3) The time of waiting for switching to the work mode is relatively long, so the user experience is poor.

### Summary

Embodiments of the present disclosure provide a method, device and system for automatically adapting multimode data card equipment, so as to at least solve the above problem.

According to a first embodiment of the present disclosure, a device for automatically adapting multimode data card equipment is provided, which includes:
a kernel layer module, which is arranged to establish a communication connection with a host module preinstalled at a target host side after the multimode data card equipment is accessed to a target host, and perform mode adaption with the host module via a customized instruction; and
a functional layer module, which is arranged to configure a mode of the multimode data card equipment according to an adapted mode obtained through the mode adaption performed by the kernel layer module.

According to a second embodiment of the present disclosure, multimode data card equipment is provided, which includes the above device for automatically adapting the multimode data card equipment.

According to a third embodiment of the present disclosure, a method for automatically adapting multimode data card equipment is provided, which includes that:
an automatic adaption device establishes a communication connection with a host module preinstalled at a target host side after the multimode data card equipment is accessed to a target host, performs mode adaption with the host module via a customized instruction, and configures a mode of the multimode data card equipment according to an adapted mode obtained through the mode adaption.

According to a fourth embodiment of the present disclosure, a system for automatically adapting multimode data card equipment is provided, which includes: a target host installed with a host module, multimode data card equipment, and the above device for automatically adapting the multimode data card;
or, the system includes: a target host installed with a host module and the above multimode data card equipment.

The technical solution provided by the embodiments of the present disclosure has the following beneficial effects:
(1) the mode adapting solution described in the embodiment of the present disclosure can automatically and conveniently install and load the mode required by a host without being affected by a host system;
(2) mode adapting installation has no need to restart USB PHY, thereby improving the stability of equipment;
(3) the configuration of different modes adapting to the data card products can be performed with the multimode data card equipment by only installing the host module on the target host once;
(4) the realization of mode configuration information of the multimode data card device does not require multiple developments and multiple configurations, thereby simplifying the development of a terminal device; and
(5) the compatibility and stability of the host module is improved.

### Brief Description of the Drawings

In order to more clearly illustrate the technical solution of the present disclosure or the traditional art, the accompanying drawings needed in description of the embodiments or the traditional art are simply introduced below. Obviously, the accompanying drawings in the following description are only some embodiments of the present disclosure, for the ordinary skill in the art, some other accompanying drawings can also be obtained according to these on the premise of not contributing creative effort.
Fig. 1 is a structure diagram of a device for automatically adapting multimode data card equipment provided by an embodiment of the present disclosure;
Fig. 2 is a general frame of automatically adapting multimode data card equipment in an embodiment of the present disclosure;
Fig. 3 is a flowchart of initializing a host module and a USB board side in an embodiment of the present disclosure;
Fig. 4 is an overall system diagram of automatically adapting multimode data card equipment in an embodiment of the present disclosure;
Fig. 5 is a flowchart of automatically adapting multimode data card equipment in an embodiment of the present disclosure; and
Fig. 6 is a flowchart of a method for automatically adapting multimode data card equipment provided by an embodiment of the present disclosure.

### Detailed Description of the Embodiments

The technical solution in the embodiments of the present disclosure is clearly and completely described below in combination with the accompanying drawings. Obviously, the embodiments described below are just a part but not all of the embodiments of the present disclosure. Based on the embodiments in the present disclosure, all the other embodiments obtained by the ordinary skill in the art without contributing creative effort shall fall within the scope of protection of the present disclosure.

Embodiments of the present disclosure provide a method, device and system for automatically adapting multimode data card equipment. The solution provided by the embodiments of the present disclosure can not only solve the disadvantages of related art, but also introduce multiple sets of configuration, so as to flexibly and conveniently adapt to drivers of different modes. The detailed implementation process of the present disclosure is described below through some specific embodiments.

### Embodiment 1

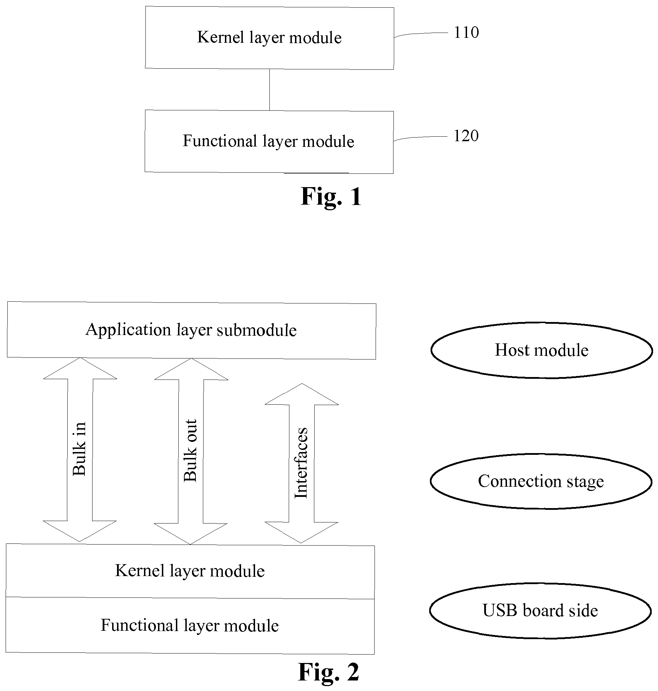

The present embodiment provides a device for automatically adapting multimode data card equipment. As shown in Fig. 1, the device includes:
a kernel layer module 110, which is arranged to establish a communication connection with a host module preinstalled at a target host side after the multimode data card equipment is accessed to a target host, and perform mode adaption with the host module via a customized instruction; and
a functional layer module 120, which is arranged to configure a mode of the multimode data card equipment according to an adapted mode obtained through the mode adaption performed by the kernel layer module.

Based on the above structure framework and implementation principle, several specific and exemplary implementation modes under the above structure are given below for detailing and optimizing the functions of the devices described in the present embodiment, specifically relating to the following contents.

The kernel layer module 110 may be arranged to send configuration information of a mode intended to be reported by the multimode data card equipment to the host module via the customized instruction, and determine the adapted mode according to a feedback message of the host module. In the present embodiment, the feedback message may include: an indication message indicating to perform mode configuration according to the mode intended to be reported or the mode required by the target host.

Furthermore, the kernel layer module 110 may be arranged to extract, when the feedback message includes the indication message indicating to perform mode configuration according to the mode required by the target host, from the feedback message a configuration index of the mode required by the target host, obtain configuration information corresponding to the configuration index from a configuration set of the multimode data card equipment according to the configuration index, configure a port of the multimode data card equipment according to the configuration information, and inform the functional layer module to configure the mode according to the configuration information corresponding to the configuration index.

Furthermore, the present embodiment also provides a mode switching solution; when a mode switch is performed,
the kernel layer module 110 may be further arranged to, when the target host performs a mode switch, receive a configuration index of a target mode which is sent by the host module, obtain configuration information corresponding to the configuration index from a configuration set of the multimode data card equipment according to the configuration index, configure a port of the multimode data card equipment according to the configuration information, and inform the functional layer module to configure the mode according to the configuration information corresponding to the configuration index of the target mode, so as to complete the mode switch.

To sum up, the device of the present embodiment provides a solution for automatically and conveniently installing and loading the mode required by a host without being affected by a host system. The solution is flexible and convenient, and better solves the problem in related art.

### Embodiment 2

The present embodiment provides multimode data card equipment, in which the device for automatically adapting the multimode data card equipment described in embodiment 1 is integrated.

Because the specific composition and implementation principle of the device for automatically adapting the multimode data card equipment have been elaborated in embodiment 1, so the structure and function of the device will not be repeated in the present embodiment. Besides, the multimode data card equipment includes the device described in embodiment 1, so the multimode data card equipment also has the technical effects described in embodiment 1.

An exemplary embodiment of the present disclosure is given according to Fig. 2 to Fig. 5. Furthermore, the technical details of the embodiment of the present disclosure are given with reference to the description of the present embodiment, so that the exemplary embodiment can better illustrate the specific implementation process of the present disclosure.

In the present embodiment, the device for automatically adapting multimode data card equipment is integrated in the multimode data card equipment. The multimode data card equipment is a USB type device (called a USB board side for short hereinafter). The host module sets an application layer submodule for accommodating the technical solution provided by the embodiment of the present disclosure. The implementation is elaborated below by taking a network card device for example.

As shown in Fig. 2, the host module and two modules of the USB board side form an independent and complete framework for automatically adapting to a network card driver. By installing the application layer submodule of the host module on a target PC host and using the data card equipment integrated with the device for automatically adapting the multimode data card equipment of the embodiment of the present disclosure, a system which can automatically and conveniently install and load the network card driver required by the PC host without being affected by the host system can be formed.

The process of installing the multimode data card equipment of the present disclosure in the target host can be completed by only installing the application layer submodule in the target host once. In the subsequent use and running of the multimode data card equipment, the main work is to automatically adapt a proper network card driver between the application layer submodule of the host module and the automatic adaption device contained in the multimode data card equipment. The board side reports to the network card the related information of the USB board side required by the target host, and according to the customized instruction, the target host selects the proper network card and loads and installs the corresponding driver.

The application layer submodule may include the requirements of providers and/or customers, or adopt a default mode. The default mode is selecting an adapted network card driver with an automatic dialling mode after adapting to the mode of the USB board side. So, the excellent capability of inheritance and compatibility between new and old products can be provided for the customers.

The USB board side includes: the kernel layer module and the functional layer module. The kernel layer module is in charge of the adaption between the network card and the host module. After the adaption is conducted successfully, the functional layer module needs to select a network card driver suiting the host module from the configuration set and perform corresponding configuration. That is, the functional layer module of the USB board side includes a configuration set including multiple configurations of the network card, and a network card driver is selected to perform the configuration after the host module and the kernel layer module perform adaption.

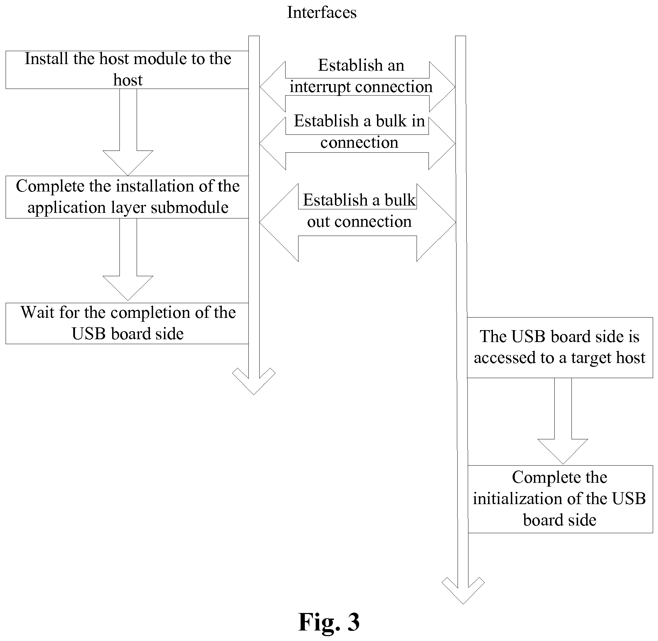

As show in Fig. 3, it is needed to install the host module to the target host. In the stage of completing the installation of the host module, the host module waits for the completion of the USB board side. After the USB board side is inserted to the target host, the initialization of the USB board side is completed in a short period of time, and the host module can establish interfaces connections (including an interrupt and bulk in/out connection) with the USB board side.

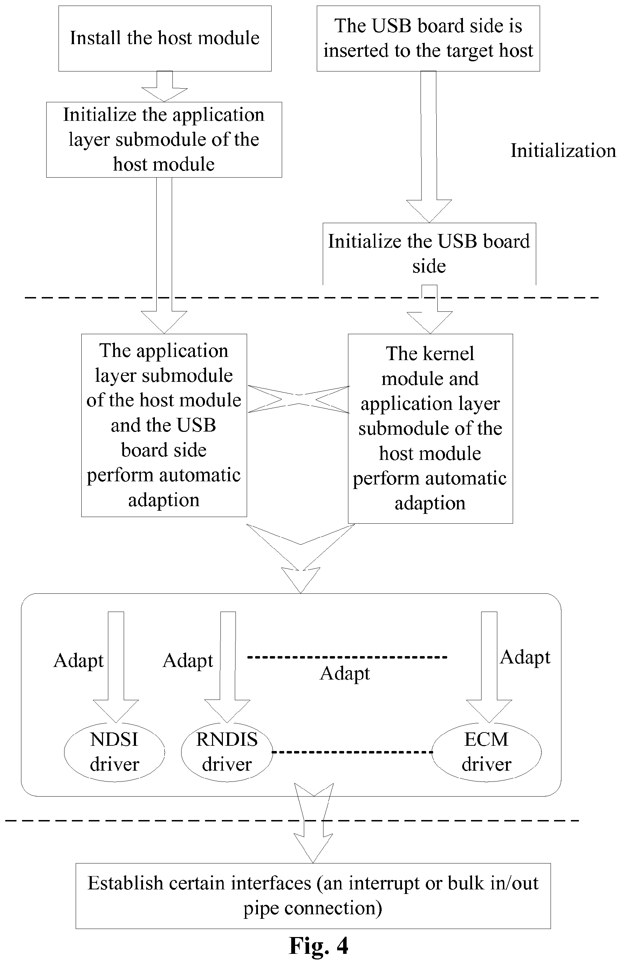

Fig. 4 shows a process of installing the host module, initializing the first connection established between the host module and the USB board side, performing the adaption of the network card driver, establishing a certain interfaces connection. In Fig. 4, the part above the first dotted line represents the process of completing the initialization of software installed in the target host and the installation of the USB board side (which has been elaborated in Fig. 3). The part between the first dotted line and the second dotted line represents the process that the USB board side and the host module perform the adaption of the network card. The part below the second dotted line represents the process of establishing a certain connection after the adaption is completed.

That is, after the host module establishes the communication connection with the USB board side, the host module and the kernel layer module of the USB board side automatically adapt, and the USB board side installs the network card driver adapting to the target host and establishes a certain specific interfaces connection (an interrupt or bulk in/out pipe connection), then the USB board side can work normally according to the connection.

Based on the above principle and structural elaboration, the specific work flow of automatically adapting the multimode data card equipment according to an exemplary embodiment of the present disclosure is given below. The flow mainly includes that: the host module establishes a default Pipe 0 connection with the USB board side, then the kernel layer module of the USB board side sends a customized instruction to inform the host module of the configuration intended to be reported, and performs a series of interactions with the host module to finally adapt the proper network card driver.

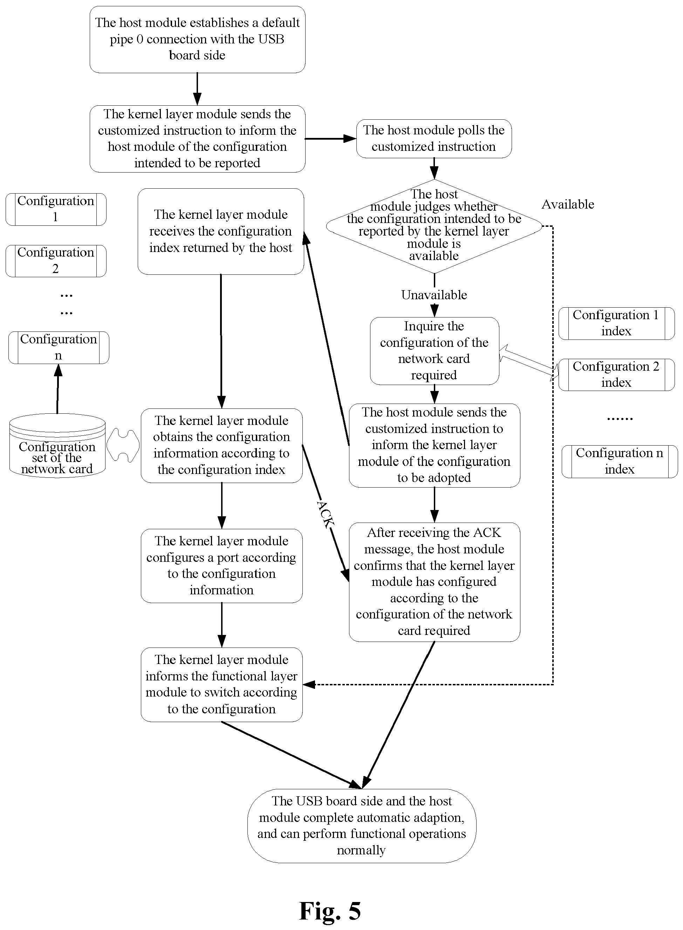

As shown in Fig. 5, the detailed steps of automatically adapting are as follows.

Before the flow starts, all the connections established between the host module and the USB board side are default Pipe 0 connections. After that, the following steps are executed.
Step 1: The kernel layer module sends a customized instruction to inform the host module of the configuration intended to be reported.
Step 2: After receiving a request from the kernel layer module, the host module polls the customized instruction.
Step 3: The host module judges the configuration intended to be reported by the kernel layer module, so as to check whether the configuration information is available; if the configuration information is available, the host module informs the USB board side to report the configuration of the network card; or else, perform Step 4.
Step 4: The host module obtains the configuration index of the configuration supported by the target host, and informs the kernel layer module of the configuration index through a customized instruction.
Step 5: After receiving the configuration index, the kernel layer module obtains the configuration information of the network card from the configuration set of the network card, and configures the port according to the configuration information.
Step 6: The kernel layer module sends an Acknowledgement (ACK) message to the host module.
Step 7: After receiving the ACK message, the host module confirms that the kernel layer module has configured according to the configuration of the network card required.
Step 8: While sending the ACK message to the host module, the kernel layer module informs the functional layer module to switch according to the configuration of the network card required.

At last, the USB board side and the host module complete automatic adaption, and can perform functional operations normally.

To sum up, a perfect solution is provided in virtue of the technical solution of the present disclosure. The perfect solution realizes that the USB network driver is automatically adapted flexibly and conveniently, and the host module and the USB board side automatically adapt the network card configuration truly.

### Embodiment 3

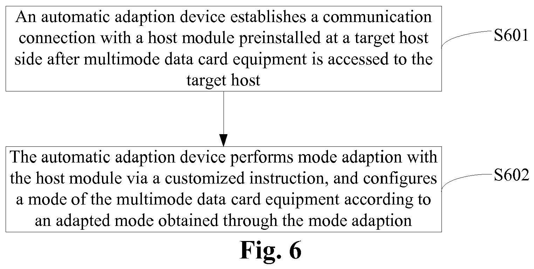

The present embodiment provides a method for automatically adapting multimode data card equipment. As shown in Fig. 6, the method includes the following steps.
S601: An automatic adaption device establishes a communication connection with a host module preinstalled at a target host side after the multimode data card equipment is accessed to the target host.
S602: The automatic adaption device performs mode adaption with the host module via a customized instruction, and configures a mode of the multimode data card equipment according to an adapted mode obtained through the mode adaption.

As an exemplary implementation, the specific implementation process of the steps may be as follows.
(1) The automatic adaption device sends, to the host module via the customized instruction, configuration information of a mode intended to be reported by the multimode data card equipment.
(2) The host module judges whether the configuration information of the mode is available; when judging that the configuration information of the mode is available, the host module sends a feedback message of Acknowledgement; or else, the host module sends a feedback message carrying information of a mode required by the target host to the automatic adaption device.
(3) Based on the feedback message received, the automatic adaption device configures the mode according to the mode intended to be reported or the mode required by the target host.

When the host module judges that the configuration information of the mode is not available, the specific implementation process is as follows.

The host module sends to the automatic adaption device the feedback message carrying information of a configuration index of the mode required by the target host.

The automatic adaption device obtains configuration information corresponding to the configuration index from a configuration set of the multimode data card equipment according to the configuration index, and configures a port and mode of the multimode data card equipment according to the configuration information.

Furthermore, the present embodiment also provides a mode switching solution, which is specifically:
when the target host performs the mode switch, the host module sends a configuration index of a target mode to the automatic adaption device; and
the automatic adaption device obtains configuration information corresponding to the configuration index from a configuration set of the multimode data card equipment according to the configuration index, and configures a port and mode of the multimode data card equipment according to the configuration information of the mode, so as to complete the mode switch.

As an exemplary implementation, the automatic adaption device in the present embodiment may be integrated in the multimode data card equipment.

To sum up, the method of the present embodiment provides a solution for automatically and conveniently installing and loading the mode required by a host without being affected by a host system. The solution is flexible and convenient, and better solves the problem in related art.

### Embodiment 4

The present embodiment provides a system for automatically adapting multimode data card equipment, which includes:
a target host installed with a host module, multimode data card equipment, and the device for automatically adapting the multimode data card equipment described in embodiment 1;
or, a target host installed with a host module and the multimode data card equipment described in embodiment 2.

Because the specific composition and implementation principle of the device for automatically adapting the multimode data card equipment have been elaborated in embodiment 1, so the structure and function of the device will not be repeated in the present embodiment. Besides, the system of the present embodiment includes the device described in embodiment 1, so the system of the present embodiment also has the technical effects described in embodiment 1.

Obviously, those skilled in the art can make various modifications and variations to the present disclosure without departing from its principle and scope. If these modifications and variations of the present disclosure belong to the scope of the claims of the present disclosure and its equivalent technology, the present disclosure is intended to include these modifications and variations.

### Industrial Applicability

As mentioned above, the method, device and system for automatically adapting multimode data card equipment provided by the embodiments of the present disclosure have beneficial effects which are described as follows. In related art, it is needed to restart USB PHY during the mode switch, and when the host system adapts the mode driver, the time for installing the driver for many times and switching to the work mode is relatively long, so the user experience is poor. By virtue of the solution proposed by the embodiments of the present disclosure, the above mentioned problems can be solved. The mode required by the host can be automatically and conveniently installed and loaded without being affected by the host system. The mode adapting installation has no need to restart USB PHY, thereby improving the stability of equipment. The configuration of different modes adapting to the data card products can be performed with the multimode data card equipment by only installing the host module on the target host once. The realization of mode configuration information of the multimode data card device does not require multiple developments and multiple configurations, thereby simplifying the development of a terminal device. The compatibility and stability of the host module is improved.

## Claims

1. A device for automatically adapting multimode data card equipment, comprising:
a kernel layer module, which is arranged to establish a communication connection with a host module preinstalled at a target host side after the multimode data card equipment is accessed to a target host, and perform mode adaption with the host module via a customized instruction; and
a functional layer module, which is arranged to configure a mode of the multimode data card equipment according to an adapted mode obtained through the mode adaption performed by the kernel layer module.

2. The device as claimed in claim 1, wherein the kernel layer module is arranged to send, to the host module via the customized instruction, configuration information of a mode intended to be reported by the multimode data card equipment, and determine the adapted mode according to a feedback message of the host module; wherein the feedback message comprises: an indication message indicating to perform mode configuration according to the mode intended to be reported or an indication message indicating to perform mode configuration according to a mode required by the target host.

3. The device as claimed in claim 2, wherein the kernel layer module is further arranged to, when the feedback message comprises the indication message indicating to perform mode configuration according to the mode required by the target host, extract from the feedback message a configuration index of the mode required by the target host, obtain configuration information corresponding to the configuration index from a configuration set of the multimode data card equipment according to the configuration index, configure a port of the multimode data card equipment according to the configuration information, and inform the functional layer module to configure the mode according to the configuration information corresponding to the configuration index.

4. The device as claimed in any one of claims 1 to 3, wherein
the kernel layer module is further arranged to, when the target host performs a mode switch, receive a configuration index of a target mode which is sent by the host module, obtain configuration information corresponding to the configuration index from a configuration set of the multimode data card equipment according to the configuration index, configure a port of the multimode data card equipment according to the configuration information, and inform the functional layer module to configure the mode according to the configuration information corresponding to the configuration index of the target mode, so as to complete the mode switch.

5. Multimode data card equipment, comprising a device as claimed in any one of claims 1 to 4.

6. A method for automatically adapting multimode data card equipment, comprising:
establishing, by an automatic adaption device, a communication connection with a host module preinstalled at a target host side after the multimode data card equipment is accessed to a target host, performing, by the automatic adaption device, mode adaption with the host module via a customized instruction, and configuring, by the automatic adaption device, a mode of the multimode data card equipment according to an adapted mode obtained through the mode adaption.

7. The method as claimed in claim 6, wherein performing, by the automatic adaption device, mode adaption with the host module via the customized instruction, and configuring, by the automatic adaption device, the mode of the multimode data card equipment according to the adapted mode obtained through the mode adaption comprises:
sending to the host module via the customized instruction, by the automatic adaption device, configuration information of a mode intended to be reported by the multimode data card equipment;
judging, by the host module, whether the configuration information of the mode is available; when judging that the configuration information of the mode is available, sending, by the host module, a feedback message of Acknowledgement, ACK; or else, sending, by the host module, a feedback message carrying information of a mode required by the target host to the automatic adaption device; and
based on the feedback message, configuring, by the automatic adaption device, the mode according to the mode intended to be reported or the mode required by the target host.

8. The method as claimed in claim 7, wherein
when judging that the configuration information of the mode is not available, sending to the automatic adaption device, by the host module, the feedback message carrying information of a configuration index of the mode required by the target host; and
obtaining, by the automatic adaption device, configuration information corresponding to the configuration index from a configuration set of the multimode data card equipment according to the configuration index, and configuring, by the automatic adaption device, a port and mode of the multimode data card equipment according to the configuration information.

9. The method as claimed in claim 6, further comprising:
when the target host performs a mode switch, sending, by the host module, a configuration index of a target mode to the automatic adaption device; and
obtaining, by the automatic adaption device, configuration information corresponding to the configuration index from a configuration set of the multimode data card equipment according to the configuration index, and configuring a port and mode of the multimode data card equipment according to the configuration information, so as to complete the mode switch.

10. The method as claimed in any one of claims 6 to 9, wherein the automatic adaption device is integrated in the multimode data card equipment.

11. A system for automatically adapting multimode data card equipment, comprising: a target host installed with a host module, multimode data card equipment, and the device for automatically adapting the multimode data card equipment as claimed in any one of claims 1 to 4;
or, comprising: a target host installed with a host module and the multimode data card equipment as claimed in claim 5.
